Europäisches Patentamt

European Patent Office

Office européen des brevets

(11) Veröffentlichungsnummer: **0 297 316 B1**

# EUROPÄISCHE PATENTSCHRIFT

(45) Veröffentlichungstag der Patentschrift: **22.01.92**

(51) Int. Cl.⁵: **C25B 9/04**, H01M 8/24

(21) Anmeldenummer: **88109072.4**

(22) Anmeldetag: **07.06.88**

(54) **Einrichtung zur Stromzuführung in die poröse Anode einer bipolaren Platte eines Zellenstapels in Filterpressenanordnung.**

(30) Priorität: **01.07.87 DE 3721753**

(43) Veröffentlichungstag der Anmeldung:
**04.01.89 Patentblatt 89/01**

(45) Bekanntmachung des Hinweises auf die
Patenterteilung:
**22.01.92 Patentblatt 92/04**

(84) Benannte Vertragsstaaten:
**AT BE CH DE ES FR GB GR IT LI NL SE**

(56) Entgegenhaltungen:
**EP-A- 0 098 517**
**GB-A- 1 178 179**

**PATENT ABSTRACTS OF JAPAN, Band 10,
Nr. 54 (E-385)[2111], 4. März 1986; & JP-A-60
207 252 (FUJI DENKI SOUGOU KENKYUSHO
K.K.) 18-10-1985**

(73) Patentinhaber: **Messerschmitt-Bölkow-Blohm
Gesellschaft mit beschränkter Haftung
Robert-Koch-Strasse
W-8012 Ottobrunn(DE)**

(72) Erfinder: **Hofmann, Hans, Dr.
Brentanostrasse 4
W-6052 Mühlheim(DE)**
Erfinder: **Wendt, Hartmut, Prof. Dr.
Forsthausstrasse 33
W-6110 Dieburg(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf die Einrichtung zur Stromzuführung in die poröse Anode einer bipolaren Platte eines Zellenstapels in Filterpressenanordnung, wobei die Anode aus einer porösen Metallschicht besteht, die durch reduktives Sintern einer Aussparungen enthaltenden Metalloxidschicht gebildet worden ist.

Eine solche bipolare Platte beseht aus einem Diaphragma, das beidseitig mit porösen Elektroden versehen ist, also mit einer porösen Anodenschicht auf der einen und mit einer porösen Kathodenschicht auf der anderen Seite.

Die Elektroden einer herkömmlichen bipolaren Platte eines solchen Zellenstapels werden aus Lochblechen gebildet, so daß durch Punktschweißen oder Andrücken an die Lochbleche ein Kontakt für die Stromführung hergestellt werden kann.

Aus der EP-A-0 098 517 ist es bekannt, die bipolare Platte als Cermet-Metall-Verbund herzustellen. Dazu wird auf beide Seiten einer Schicht aus einem Gemisch aus Nickelpulver und Nickeltitanat eine Schicht aus Nickeloxidpulver aufgedruckt und dann das Ganze in einer wasserstoffhaltigen Atmosphäre reduktiv gesintert, um aus dem Gemisch aus Nickelpulver und Nickeltitanat das Cermet-Diaphragma und aus den Nickeloxidpulver-Schichten die porösen Elektrodenschichten zu bilden. Bei diesen durch reduktives Sintern hergestellten porösen Elektrodenschichten hat sich herausgestellt, daß zwar durch bloßes Andrücken eines oder mehrerer verteilter Kontakte an die poröse Kathodenschicht eine hinreichende Stromzuführung und Stromverteilung erreicht werden kann, nicht jedoch an der Anodenschicht.

Aufgabe der Erfindung ist es daher, eine zufriedenstellende Kontaktierung also Stromzuführung und -verteilung für die Anode einer bipolaren Platte eines Zellenstapels in Filterpressenanordnung bereitzustellen, welche durch reduktives Sintern einer Metalloxidschicht gebildet worden ist.

Dies wird erfindungsgemäß durch die im Anspruch 1 gekennzeichnete Einrichtung erreicht. In den Ansprüchen 2 bis 4 sind vorteilhafte Ausgestaltungen der Stromführungseinrichtung angegeben. Im Anspruch 5 ist ein bevorzugtes Verfahren zur Herstellung der erfindungsgemäßen Stromführungseinrichtung gekennzeichnet, welches durch die Maßnahmen der Ansprüche 6 bis 8 in vorteilhafter Weise ausgestaltet wird.

Durch die Einbettung der Metallplättchen in die reduktiv gesinterte poröse Anodenschicht wird erfindungsgemäß eine kristalline metallische Verbindung zwischen poröser Anodenschicht und Metallplättchen hergestellt, d.h. die Bildung einer einen hohen Ohm'schen Widerstand aufweisenden Sperroxid-Schicht zwischen poröser Anodenschicht und Metallplättchen verhindert.

Die polygonale, vorzugsweise Sternform der Metallplättchen führt zu einer besseren Stromverteilung und damit zu einer weiteren Verringerung des Spannungsabfalls. Erfindungsgemäß können also sehr hohe Ströme auch in die Anode solcher dünnen, beispielsweise 0,2 bis 0,5 mm starker Sinter-Metallelektroden eingebracht werden, wie sie für die fortgeschrittene, alkalische Wasserelektrolyse und in der Brennstoffzellen-Technologie zum Einsatz kommen.

Nachstehend ist die Erfindung anhand der Zeichnung näher erläutert. Darin zeigen jeweils schematisch

Fig. 1      eine Seitenansicht eines Zellenstapels aus bipolaren Platten,

Fig. 2 und 3      jeweils perspektivisch eine bipolare Platte vor bzw. nach der Anordnung eines Blechs zur Kontaktierung der Anode der Platte mit der Kathode der benachbarten Platte.

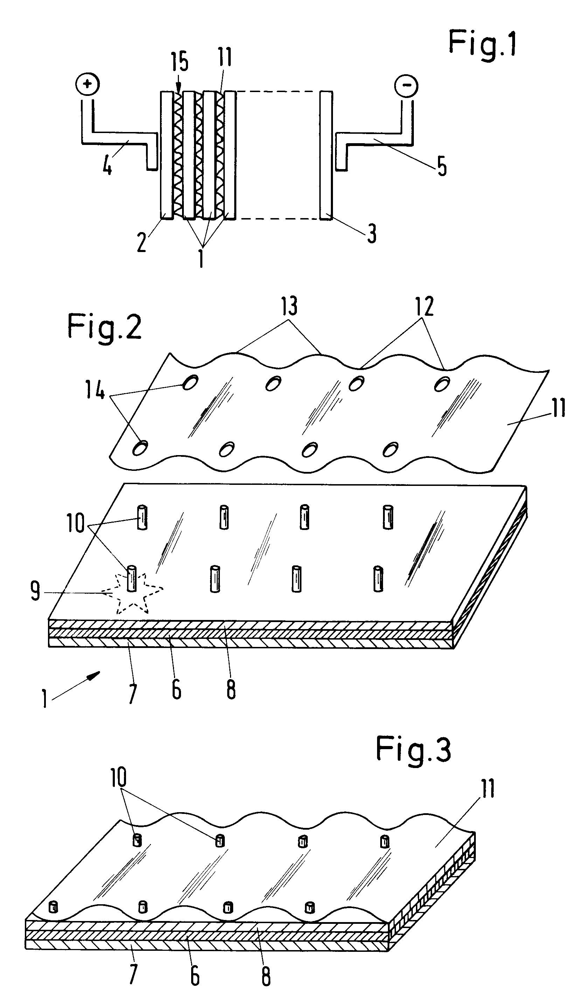

Gemäß Fig. 1 sind zwischen Endplatten 2 und 3 aus Metall, die mit einer Kupferschiene 4 bzw. 5 zur Stromführung versehen sind, bipolare Platten 1 angeordnet.

Gemäß Fig. 2 und 3 besteht jede bipolare Platte 1 aus einem Diaphragma 6, einer Kathode 7 und einer Anode 8. Kathode 7 und Anode 8 sind aus einer durch reduktives Sintern von Metalloxid erhaltenen porösen Metallschicht gebildet. In der Anodenschicht 8 sind sternförmige Metallplättchen 9 eingebettet, welche mit einem Stift 10 versehen sind. Ein Blech 11 ist mit sich zur Anode 8 erstreckenden Noppen oder Ausbuchtungen 12 und von der Anode 8 abgewandten Noppen oder Ausbuchtungen 13 versehen.

Die sich zur Anode 8 erstreckenden Ausbuchtungen 12 weisen Löcher 14 auf, in die die Stifte 10 steckbar sind, die dann mit dem Blech 11 verschweißt oder andererweitig metallisch leitend verbunden werden. Die Ausbuchtungen 13 werden an die Kathodenschicht der benachbarten bipolaren Platte angedrückt.

Gemäß Fig. 1 befindet sich also im Zwischenraum 15 zwischen je zwei benachbarten Platten 1 des Stapels jeweils ein solches Blech 11, wobei der Zwischenraum 15 zugleich den Elektrolyten aufnimmt.

Zur Herstellung der Anodenschicht 8 wird, wie beispielsweise in EP-A-0 098 517 beschrieben, auf die Diaphragmaschicht 6 mittels einer Metalloxidpaste durch Siebdruck eine Metalloxidschicht aufgetragen. Das Siebdrucken wird dabei erfindungsgemäß so durchgeführt, daß in der Metalloxidschicht Aussparungen offengelassen werden, welche den in diese Schicht einzusetzenden Metallplättchen entsprechen, also bei dem in

Fig. 2 dargestellten Ausführungsbeispiel sternförmig ausgebildet sind. Das Siebdrucken kann dabei unmittelbar auf die Diaphragmenschicht 6 erfolgen.

Nach dem Einsetzen der Metallplättchen 9 in die entsprechenden Aussparungen der siebgedruckten Metalloxidschicht werden die Metallplättchen 9 mit einer Metall- oder Metalloxidpaste überstrichen und somit homogen mit der Anodenschicht 8 während des nachfolgenden reduktiven Sinterns verbunden.

Die Formgebung und Verteilung der Metallplättchen 9 in der Anodenschicht 8 richtet sich nach der Stromdichte bzw. der angestrebten Stromverteilung. Dabei können die Metallplättchen 9, wie in Fig. 2 und 3 dargestellt, über die Metallstifte 10 mit dem Kontaktblech 11 verbunden sein. Jedoch ist es auch möglich, Metallplättchen 9 ohne Metallstifte 10 zu verwenden. In diesem Fall wird beim Überstreichen der Metallplättchen mit der Metall- bzw. Metalloxidpaste ein Bereich auf denselben ausgespart. Die Ausbuchtungen oder Noppen 12 des Blechs 11 werden dann mit diesen ausgesparten Bereichen durch entsprechenden Druck in Kontakt gebracht.

## Patentansprüche

1. Einrichtung zur Stromzuführung in die poröse Anode einer bipolaren Platte eines Zellenstapels in Filterpressenanordnung, wobei die Anode aus einer porösen Metallschicht besteht, die durch reduktives Sintern einer Aussparungen enthaltenden Metalloxidschicht gebildet worden ist, **dadurch gekennzeichnet, daß** die Stromzuführungseinrichtung ein in die Aussparungen der porösen Anoden-Metallschicht (8) eingesintertes Metallplättchen (9) aufweist.

2. Einrichtung nach Anspruch 1, **dadurch gekennzeichnet, daß** das Metallplättchen (9) polygonal ausgebildet ist.

3. Einrichtung nach Anspruch 1 oder 2, **dadurch gekennzeichnet, daß** ein Blech (11) vorgesehen ist, das mit den Metallplättchen (9) zugewandten und von den Metallplättchen (9) abgewandten Ausbuchtungen (12 bzw. 13) versehen ist, wobei die den Metallplättchen (9) zugewandten Ausbuchtungen (12) mit den Metallplättchen (9) und die von den Metallplättchen (9) abgewandten Ausbuchtungen (13) mit der Kathode der benachbarten bipolaren Platte (1) verbunden sind.

4. Einrichtung nach Anspruch 3, **dadurch gekennzeichnet, daß** zur Verbindung der Metallplättchen (9) mit den ihnen zugewandten Ausbuchtungen (12) des Blechs (11) die Metallplättchen (9) mit aus der porösen Metallschicht (8) herausragenden Metallstiften (10) und die den Metallstiften (10) zugewandten Ausbuchtungen (12) des Blechs (11) mit Löchern (14) versehen sind, in die die Metallstifte (10) ragen.

5. Verfahren zur Herstellung der Einrichtung nach einer der vorstehenden Ansprüche, **dadurch gekennzeichnet, daß** in der reduzierbaren Metalloxidschicht, aus der die Anodenschicht (8) gebildet wird, Aussparungen vorgesehen werden, in die die Metallplättchen (9) eingesetzt werden, worauf die Metallplättchen (9) mit Metalloxid- oder Metallpulver-Masse beschichtet und dann das Metalloxid, mit dem die Metallplättchen (9) beschichtet sind, zusammen mit der Metalloxidschicht, aus der die Anodenschicht (8) gebildet wird, reduktiv gesintert wird.

6. Verfahren nach Anspruch 5, **dadurch gekennzeichnet, daß** die Metalloxidschicht mit den Aussparungen durch Siebdrucken hergestellt wird.

7. Verfahren nach einem der vorstehenden Ansprüche, **dadurch gekennzeichnet, daß** als Metalloxid ein Oxid eines Metalls der ersten, zweiten oder achten Nebengruppe des Periodensystems verwendet wird.

8. Verfahren nach Anspruch 7, **dadurch gekennzeichnet, daß** als Metalloxid Nickel-, Kobalt- und/oder Eisenoxid verwendet wird.

## Claims

1. Device for supplying current into the porous anode of a bipolar plate of a stack of cells in a filterpress arrangement, in which respect the anode is composed of a porous metal layer which has been formed by reductive sintering of a metal-oxide layer having recesses, characterised in that the current-supply device comprises metal platelets (9) which have been sintered into the recesses of the porous anode metal layer (8).

2. Device according to claim 1, characterised in that the metal platelets (9) are polygonal.

3. Device according to claim 1 or 2, characterised in that a metal sheet (11) is provided which is provided with curved formations facing towards the metal platelets (9) and facing away from the metal platelets (9), in which respect the curved formations (12) facing towards the metal platelets (9) are connected to the metal platelets (9), and the curved formations (13) facing away from the metal platelets (9) are connected to the cathode of the adjacent bipolar plate (1).

4. Device according to claim 3, characterised in that, for connecting the metal platelets (9) to the curved formations (12) of the sheet (11) facing towards them, the metal platelets (9) are provided with metal pins (10) which protrude from the porous metal layer (8), and the curved formations (12) of the sheet (11) facing towards the metal pins (10) are provided with holes (14) into which said metal pins (10) enter.

5. Process for manufacturing the device according to one of the above claims, characterised in that the reducible metal-oxide layer, which provides the anode layer (8), is provided with recesses into which the metal platelets (9) are inserted, whereupon the metal platelets (9) are coated with metal oxide or metal powder, whereafter the metal oxide, with which the metal platelets (9) have been coated, is reductively sintered together with the metal oxide layer which provides the anode layer (8).

6. Process according to claim 5, characterised in that the metal oxide layer with the recesses is manufactured by way of screen printing.

7. Process according to one of the above claims, characterised in that the oxide of a metal of the first, second or eighth sub-group of the periodic system is used as the metal oxide.

8. Process according to claim 7, characterised in that the metal oxide is a nickel-, cobalt- and/or iron oxide.

**Revendications**

1. Dispositif pour l'amenée de courant à l'anode poreuse d'une plaque bipolaire d'une empilement de cellules de type filtrepresse, l'anode étant formée d'une couche métallique poreuse, obtenue par frittage par réduction d'une couche d'oxyde métallique comportant des réserves caractérisé en ce que le dispositif d'amenée de courant présente une plaquette métallique (9) ancrée par frittage dans les réserves de la couche métallique anodique (8) poreuse.

2. Dispositif selon la revendication 1 caractérisé en ce que la plaquette métallique (9) a une forme polygonale.

3. Dispositif selon la revendication 1 ou 2 caractérisé en ce quil est prévu une tôle (11) qui est munie de forme embouties (12 ou 13) tournées vers et dirigées à l'opposé des plaquettes métalliques (9), les formes embouties (12) tournées vers les plaquettes métalliques (9) étant reliées aux plaquettes métalliques (9) et les formes embouties (13) dirigées à l'opposé des plaquettes métalliques (9) étant reliées à la cathode de la plaque bipolaire (1) voisine.

4. Dispositif selon la revendication 3, caractérisé en ce que pour assurer la liaison des plaquettes métalliques (9) avec les formes embouties (12) de la tôle (11) tournées vers elles, les plaquettes métalliques (9) sont munies d'ergots métalliques (10) faisant saillie par rapport à la couche métallique poreuse (8) et les formes embouties (12) de la tôle (11) tournées vers les ergots (10) sont munies de trous (14) dans lesquels pénètrent les ergots (10).

5. Procédé de fabrication du dispositif selon l'une des revendications précédentes caractérisé en ce qu'on ménage dans la couche d'oxyde métallique réductible formant la couche anodique (8) des réserves, dans lesquelles on place les plaquettes métalliques (9), on applique ensuite une masse d'oxyde métallique ou de poudre métallique sur les plaquettes métalliques (9) et on fritte par réduction l'oxyde métallique recouvrant les plaquettes métalliques (9) en même temps que la couche d'oxyde métallique formant la couche anodique (8).

6. Procédé selon la revendication 5, caractérisé en ce qu'on réalise la couche d'oxyde métallique avec les réserves par sérigraphie.

7. Procédé selon l'une des revendication précédentes, caractérisé en ce qu'on utilise comme oxyde métallique un oxyde d'un métal du premier, deuxième ou huitième sous-groupe de la classification périodique des éléments.

8. Procédé selon la revendication 7, caractérisé en ce qu'on utilise comme oxyde métallique du nickel, du cobalt et/ou de l'oxyde de fer.

Fig.1

Fig.2

Fig.3